# FASCICULE DE BREVET EUROPEEN

(11) **EP 2 016 770 B1**
(45) Date de publication et mention de la délivrance du brevet: **21.08.2013**
(21) Numéro de dépôt: 07728408.1
(22) Date de dépôt: 23.04.2007
(51) Int. Cl.: H04N 21/643

(54) **PROCEDE DE GENERATION DE PAQUETS A DESTINATION D'AU MOINS UN RECEPTEUR MOBILE**
VERFAHREN ZUR ERZEUGUNG VON FÜR MINDESTENS EINEN MOBILREZEPTOR BESTIMMTEN PAKETEN
METHOD FOR GENERATING PACKETS DESTINED FOR AT LEAST ONE MOBILE RECEPTOR

(30) Priorité: 27.04.2006 EP 06113205
(43) Date de publication de la demande: 21.01.2009
(73) Titulaire: Nagravision S.A., 1033 Cheseaux-sur-Lausanne (CH)
(72) Inventeur: MOREILLON, Guy, CH-1042 Bioley-Orjulaz (CH)
(74) Mandataire: Leman Consulting S.A.
(86) Numéro de dépôt international: PCT/EP2007/053951
(87) Numéro de publication internationale: WO 2007/125053

(56) Documents cités:
- DIGITAL VIDEO BROADCASTING: "IP Datacast over DVB-H: Service Purchase and Protection (SPP)"[Online] décembre 2005 (2005-12), XP002406708 Extrait de l'Internet: URL:http://www.dvb-h.org/PDF/a100.tm3455r3 .cbms1476.IPDC_SPP.pdf> [extrait le 2006-11-09]
- DIGITAL VIDEO BROADCASTING: "DVB-H Implementation Guidelines"[Online] novembre 2005 (2005-11), XP002406707 Extrait de l'Internet: URL:http://www.dvb-h.org/PDF/Implementatio n%20Guidelines%20TR102377.V1.2.1.pdf> [extrait le 2006-11-09]
- DIGITAL VIDEO BROADCASTING: "IP Datacast over DVB-H: Architecture"[Online] novembre 2005 (2005-11), XP002406706 Extrait de l'Internet: URL:http://www.dvb-h.org/PDF/a098.tm3347r2 .cbms1168r15.IPDC_Architecture.pdf> [extrait le 2006-11-09]

## Description

### DOMAINE TECHNIQUE

La présente invention concerne de façon générale la transmission de contenus à destination de récepteurs mobiles. Ces contenus peuvent en particulier, mais pas exclusivement être des événements de télévision à péage, des contenus audio, des jeux, des logiciels ou des informations telles que des prévisions météorologiques, des informations boursières ou autres.

Les récepteurs concernés peuvent en particulier être des téléphones portables, des assistants personnels (PDA), des ordinateurs portables, des récepteurs destinés à être placés dans des véhicules ou tout récepteur mobile développé pour une application utilisant les contenus indiqués ci-dessus.

De façon plus détaillée, l'invention concerne un procédé de génération de paquets à destination d'au moins un récepteur mobile.

### TECHNIQUE ANTERIEURE

Dans le cadre de la diffusion de contenus tels que définis ci-dessus et en particulier de contenus de télévision à accès conditionnel à destination de récepteurs mobiles, connus sous l'acronyme DVB-H (Digital Video Broadcast - Handheld), les contenus sont envoyés de façon cyclique sous forme de paquets (connus sous le nom de Time Slices). Les paquets correspondent à des services. Un service peut être défini comme un ou plusieurs flux numériques formant un sous-ensemble du flux numérique global. Ce sous-ensemble partage des données d'identification communes de telle sorte que l'on soit en mesure de créer un événement à partir de ces données d'identification. Les données des paquets sont généralement chiffrées de sorte qu'il est nécessaire d'acquérir une clé pour pouvoir accéder au contenu. Cette clé, de même qu'éventuellement d'autres informations telles que des conditions d'accès par exemple, est envoyée dans un message de contrôle ECM contenu dans les paquets eux-mêmes.

Dans le domaine du DVB-H comme dans celui de la télévision numérique terrestre DVB-T (Digital video broadcasting - terrestrial) les messages de contrôle ECM sont diffusés de manière répétitive, pour qu'un tel message puisse rapidement atteindre son destinataire. Une fréquence de répétition typique de ce genre de messages est de un message de contrôle toutes les 50 ms.

Lorsque la fréquence de répétition des messages est grande, le nombre de messages de contrôle à diffuser l'est aussi. Ces messages occupent une bande passante importante.

Lorsque l'on utilise des récepteurs mobiles fonctionnant sur batteries, le problème de consommation d'énergie est particulièrement important. En effet, afin d'assurer une autonomie maximale au récepteur, il est utile de chercher à réduire au strict minimum, la consommation d'énergie. En d'autres termes, il est essentiel de traiter aussi peu d'informations inutiles que possible.

Dans les systèmes de l'art antérieur, chaque paquet contient, en plus du contenu audio/vidéo correspondant à un événement, un certain nombre d'informations qui permettent au récepteur d'accéder au contenu et de rendre possible le visionnement en continu de l'événement. Ces informations sont notamment, comme indiqué précédemment, un identifiant des messages de contrôle ECM.

Du fait de l'envoi du contenu sous forme de paquets discrets et non de flux continu, comme dans le cas du DVB-T, lorsqu'un utilisateur change de canal, il doit attendre la réception d'un paquet relatif au service concerné, puis le traitement de ce paquet pour pouvoir accéder à ce nouveau canal. Le temps d'attente est conditionné par le temps de cycle de l'envoi des données pour chaque service. Ce temps d'attente est indépendant de la fréquence de répétition des messages de contrôle ECM. Etant donné le nombre important de messages de contrôle ECM dans chaque paquet, la bande passante est consommée inutilement.

Le document XP 002406707 est un guide d'implémentation de la norme DVB-H. Il décrit notamment comment des messages sont transmis aux récepteurs sous forme de paquets, ce que contiennent ces paquets et comment ils sont traités de façon à permettre la visualisation du contenu. Ce document mentionne également la répétition des ECM afin de permettre un accès rapide au contenu.

### EXPOSE DE L'INVENTION

La présente invention se propose de pallier les inconvénients des procédés de l'art antérieur en réalisant un procédé dans lequel la bande passante est utilisée de façon optimale, c'est-à-dire que chaque paquet de données contient un maximum de données utiles et un minimum de données inutiles. Ceci permet également une meilleure consommation de l'énergie puisqu'une même quantité d'énergie est consommée pour traiter une plus grande quantité d'informations utiles. Etant donné que la gestion de l'énergie est un point essentiel dans le domaine du DVB-H, cette optimisation du contenu des paquets a toute son importance dans ce domaine.

Le but de l'invention est atteint par un procédé de génération de paquets à destination d'au moins un récepteur mobile, comprenant les étapes suivantes :
- réception d'un flux encrypté représentant un service, ce flux comprenant au moins un canal de données et un canal de messages de contrôle ECM,
- découpage dudit flux en vue de son envoi par paquets au récepteur mobile,
- extraction du canal de messages de contrôle de ce flux découpé,
- formation d'un bloc contenant au moins le canal de données, compatible avec la diffusion audit récepteur mobile,
- extraction à partir dudit flux découpé, d'au moins un message de contrôle du canal de messages de contrôle,
- introduction dans le bloc, d'un nombre de messages de contrôle inférieur à la totalité des messages de contrôle extraits, de façon à former un paquet.

Le but de la présente invention est également atteint par un procédé de génération de paquets à destination d'au moins un récepteur mobile, comprenant les étapes suivantes :
- réception d'un flux encrypté représentant un service, ce flux comprenant au moins un canal de données et un canal de messages de contrôle ECM,
- découpage dudit flux en vue de son envoi par paquets au récepteur mobile,
- formation à partir dudit flux découpé, d'un bloc contenant au moins le canal de données et le canal de messages de contrôle, compatible avec la diffusion audit récepteur mobile,
- détermination des messages identiques du canal de messages de contrôle répétés dans ledit bloc,
- élimination d'au moins certains desdits messages identiques répétés, tout en conservant au moins un desdits messages identiques répétés.

Dans le contexte de la présente invention, un paquet est un bloc auquel au moins un message de contrôle ECM a été ajouté. La solution proposée par la présente invention consiste à générer des paquets ne contenant pas de données inutiles. En particulier les données qui ne sont utilisées qu'une seule fois ne figurent pas à plusieurs reprises dans chaque paquet.

Selon cette invention, essentiellement deux modes de réalisation sont possibles. Selon l'un des modes, les paquets sont formés comme dans les systèmes de l'art antérieur. Les données redondantes sont ensuite éliminées. Selon un autre mode de réalisation, les données redondantes ne sont pas utilisées lors de la formation d'un paquet. Seules les données indispensables pour permettre l'accès au contenu sont utilisées.

### DESCRIPTION SOMMAIRE DES DESSINS

La présente invention et ses avantages seront mieux compris en référence aux figures annexées et à la description détaillée de modes de réalisation particuliers, dans lesquelles :
- la figure 1 illustre les données correspondant à différents services, sous forme de flux continus;
- la figure 2 illustre ces mêmes données sous forme de paquets;
- la figure 3 représente le contenu de l'un des paquets de la figure 2 selon l'art antérieur;
- la figure 4 représente le contenu de l'un des paquets de la figure 2 selon un premier mode de réalisation de l'invention ; et
- la figure 5 représente le contenu de l'un des paquets de la figure 2 selon un deuxième mode de réalisation de l'invention

### MANIERES DE REALISER L'INVENTION

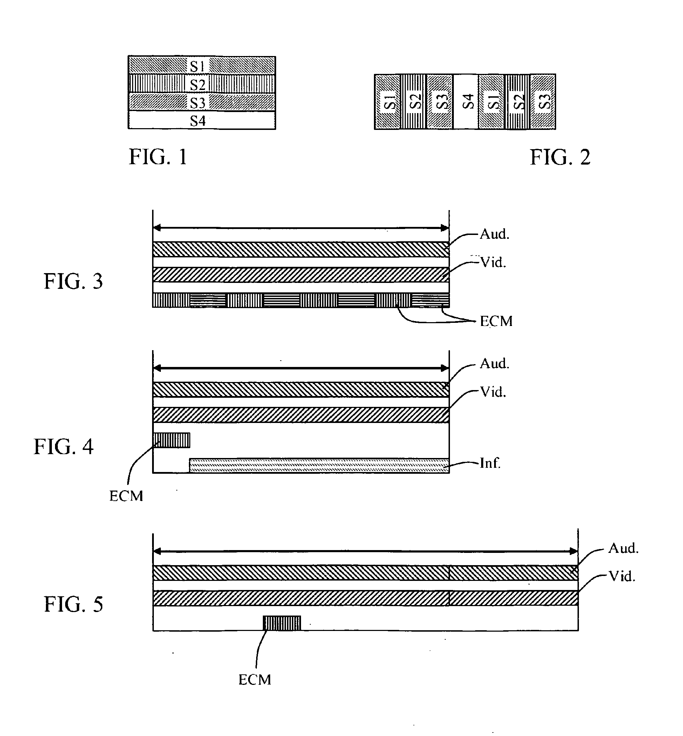

La figure 1 illustre de façon schématique, des contenus sous forme de flux continus. Dans le contexte de l'invention, des contenus tels que des événements de télévision à péage, des contenus audio, des jeux, des logiciels ou des informations telles que des prévisions météorologiques, des informations boursières ou autres sont diffusés par des fournisseurs de contenu. Dans l'invention, ces contenus sont destinés à des récepteurs mobiles tels que des téléphones portables, des assistants personnels (PDA), des ordinateurs portables, des récepteurs destinés à être placés dans des véhicules ou tout récepteur mobile développé pour une application utilisant les contenus indiqués ci-dessus. Ces récepteurs mobiles sont liés à un centre de gestion qui est notamment en charge de la gestion des droits d'accès, des abonnements, des clés de chiffrement des contenus, etc. Les fournisseurs de contenus et le centre de gestion peuvent être liés à une même entité ou être des entités distinctes.

De façon bien connue, comme cela est illustré par la figure 2, les contenus diffusés à destination de récepteurs mobiles ne sont généralement pas diffusés en continu, mais plutôt sous la forme de paquets de données. Ces paquets sont répartis en services distincts, notés S1, S2, S3 et S4 sur les figures 1 et 2. Chaque paquet correspond à un canal ou un service. Les paquets sont diffusés de manière cyclique selon un temps de cycle généralement compris entre 2 et 5 secondes dans la pratique. Chaque paquet contient la quantité d'informations correspondant au temps de cycle choisi. A titre d'exemple, dans le cas de la diffusion d'un événement de télévision à péage, imaginons que le temps de cycle soit égal à 4 secondes. Le premier paquet noté S1 sur la figure 2 contient des données correspond à 4 secondes lorsqu'elles sont affichées sur le récepteur mobile. Après ce temps de cycle, un deuxième cycle recommence par la diffusion du contenu lié au service 1, et contenant également l'équivalent de 4 secondes de visualisation. La durée de transmission d'un paquet peut être compris entre 0,1 et 0,5 secondes environ en pratique. Ces temps de cycle et de transmission effective de chaque service sont tous configurables statiquement et/ou dynamiquement.

Lorsque le récepteur est calé sur le service S1, il reçoit chaque paquet lié à ce service. Il ne reçoit pas les autres paquets liés au contenu d'autres services, de sorte qu'il peut être mis en mode veille pendant la transmission des paquets liés aux autres services S2, S3,.... Selon une réalisation pratique, ce mode de réalisation permet une économie d'énergie jusqu'à 90%.

La figure 3 représente le détail du contenu d'un paquet tel que représenté par la figure 1. Ce paquet pourrait être par exemple l'un de ceux notés S1. Selon un mode de réalisation correspondant à l'art antérieur, un paquet utilisé en particulier dans le domaine de la télévision à péage contient des données audio, notées Aud. sur les figures 3 à 5, des données vidéo, notées Vid. sur ces figures, et des messages de contrôle ECM. Ces messages de contrôle contiennent eux-mêmes, des clés permettant l'accès au contenu audio/vidéo. Ces messages sont donc essentiels pour la visualisation d'un contenu. Afin de permettre rapidement l'accès à un contenu chiffré lors d'un changement de service, les fournisseurs de contenu de télévision à péage envoient ces messages de façon fréquente et régulière. A titre d'exemple concret, même si les clés contenues dans un tel message de contrôle ECM ont une durée de validité comprise entre 1 et 30 secondes, ces messages de contrôle sont envoyés par exemple toutes les 50 ms. Ainsi, dans un système conventionnel, lors d'un changement de canal ou de service, il est nécessaire d'attendre seulement un temps très court jusqu'à la réception du prochain message de contrôle ECM pour pouvoir accéder au contenu.

Les figures 4 et 5 illustrent le contenu d'un paquet, selon deux formes de réalisation distinctes de l'invention. Dans la figure 4, parmi tous les messages de contrôle ECM qui sont contenus dans un paquet, un seul est nécessaire. En effet, contrairement aux systèmes conventionnels de télévision à péage, dans lesquels les données sont envoyées sous la forme de flux continus, dans le domaine du DVB-H, il est nécessaire et suffisant que chaque paquet ait au moins un message de contrôle ECM.

En effet, lors d'un changement de service de la part de l'utilisateur, il est de toute façon nécessaire d'attendre d'avoir reçu un paquet complet pour le nouveau service requis avant d'avoir accès à ce service. Le fait de disposer de plusieurs messages de contrôle dans le même paquet ne permet donc pas d'accélérer l'accès aux données.

Selon une première variante du procédé de l'invention, le contenu à transmettre est, dans un premier temps, traité de façon conventionnelle c'est-à-dire que les contenus audio et vidéo continus tels que représentés par la figure 1 sont scindés en blocs de façon à former un contenu audio/vidéo discret. Les messages de contrôle sont traités également de façon conventionnelle c'est-à-dire que ces messages sont générés selon une fréquence importante par rapport à leur durée de validité.

Le contenu du paquet est ensuite analysé de façon à déterminer quels sont les messages redondants. Une partie de ces messages redondants est ensuite éliminée de telle sorte qu'au moins un de ces messages reste présent dans le paquet. Il est possible de conserver plus d'un exemplaire du message redondant, par exemple pour des raisons de sécurité. L'élimination de ces messages laisse une certaine place dans le paquet. A titre d'exemple, si un paquet permet d'accéder à 4 secondes de contenu et que les messages de contrôle ECM sont envoyés normalement toutes les 50 ms, il y a 80 messages par paquet. 79 de ces messages peuvent être éliminés. La place ainsi obtenue peut être utilisées pour d'autres informations, par exemple des informations auxiliaires relatives au service. De telles informations peuvent notamment être du télétexte, des sous-titres, des nouvelles défilantes ou des méta-informations. Ces informations sont notées Inf. sur la figure 4.

Dans le mode de réalisation de la figure 5, le contenu à transmettre n'est pas traité de façon conventionnelle. Dans ce mode de réalisation, des blocs sont formés sans message de contrôle ECM. Un message de contrôle unique, ou éventuellement, pour des raisons de fiabilité, un petit nombre de messages de contrôle, est ensuite ajouté au bloc pour former un paquet. La taille des données audio Aud. et vidéo Vid. introduite dans un paquet est telle que la taille totale des données audio, des données vidéo et du message de contrôle corresponde à la taille normale des paquets. Dans ce cas, la place disponible obtenue grâce à l'élimination des messages de contrôle redondants est utilisée pour du contenu audio/vidéo.

Sur la figure 4, le message de contrôle ECM est placé en début du paquet, alors que sur la figure 5, il est placé dans un endroit quelconque. Dans certains systèmes, le fait que le message de contrôle soit en début de paquet est une exigence. En effet, dans ces systèmes, le déchiffrement du message de contrôle est un préalable au déchiffrement du contenu. Si ce message de contrôle n'est pas déchiffré en premier lieu, le contenu n'est simplement pas accessible.

Dans d'autres systèmes par contre, le message de contrôle peut être placé dans un endroit quelconque du paquet, sans que cela pose un problème particulier. Le paquet est traité de façon globale. Il suffit donc que le message de contrôle soit présent pour que le paquet puisse être traité.

La présente invention est intéressante par le fait que le contenu d'un paquet est optimisé, soit en ajoutant des informations supplémentaires par rapport au contenu classique, soit en ajoutant du contenu audio-vidéo sans augmenter la taille d'un paquet.

Ainsi, pour une même énergie dépensée, l'utilisateur reçoit une plus grande quantité d'informations.

## Revendications

1. Procédé de génération de paquets à destination d'au moins un récepteur mobile, comprenant les étapes suivantes :
- réception d'un flux encrypté représentant un service, ce flux comprenant au moins un canal de données et un canal de messages de contrôle ECM,
- découpage dudit flux en vue de son envoi par paquets au récepteur mobile,
- extraction du canal de messages de contrôle de ce flux découpé,
- formation d'un bloc contenant au moins le canal de données, compatible avec la diffusion audit récepteur mobile,
- extraction à partir dudit flux découpé, d'au moins un message de contrôle du canal de messages de contrôle,
- introduction dans le bloc, d'un nombre de messages de contrôle inférieur à la totalité des messages de contrôle extraits, de façon à former un paquet.

2. Procédé de génération de paquets selon la revendication 1, **caractérisé en ce que** ledit bloc contient au moins un contenu audio/vidéo.

3. Procédé de génération de paquets selon la revendication 1 ou 2, **caractérisé en ce que** ledit paquet contient en outre des informations auxiliaires telles que du télétexte, des sous-titres, des nouvelles défilantes ou des méta-informations.

4. Procédé de génération de paquets à destination d'au moins un récepteur mobile, comprenant les étapes suivantes :
- réception d'un flux encrypté représentant un service, ce flux comprenant au moins un canal de données et un canal de messages de contrôle ECM,
- découpage dudit flux en vue de son envoi par paquets au récepteur mobile,
- formation à partir dudit flux découpé, d'un bloc contenant au moins le canal de données et le canal de messages de contrôle, compatible avec la diffusion audit récepteur mobile,
- détermination des messages identiques du canal de messages de contrôle répétés dans ledit bloc,
- élimination d'au moins certains desdits messages identiques répétés, tout en conservant au moins un desdits messages identiques répétés.

5. Procédé de génération de paquets selon la revendication 4, **caractérisé en ce que** lesdites données du canal de données forment un contenu audio/vidéo.

6. Procédé de génération de paquets selon la revendication 4, **caractérisé en ce que** l'on remplace lesdits messages éliminés par un contenu.

7. Procédé de génération de paquets selon la revendication 6, **caractérisé en ce que** ledit contenu est un contenu audio/vidéo.

8. Procédé de génération de paquets selon la revendication 6, **caractérisé en ce que** ledit contenu est formé d'informations auxiliaires telles que du télétexte, des sous-titres, des nouvelles défilantes ou des méta-informations.

9. Procédé de génération de paquets selon la revendication 4, **caractérisé en ce que** lesdits messages identiques répétés sont des messages de contrôle (ECM)

10. Procédé de génération de paquets selon la revendication 9, **caractérisé en ce que** ledit message de contrôle (ECM) est placé au début du paquet de données.

11. Procédé de génération de paquets selon la revendication 9, **caractérisé en ce que** ledit message de contrôle (ECM) est placé dans un endroit quelconque du paquet de données.

## Patentansprüche

1. Verfahren zur Erzeugung von Paketen gerichtet an mindestens einen mobilen Empfänger, mit den folgenden Schritten:
- Empfang eines verschlüsselten Stroms, der einen Dienst darstellt und mindestens einen Datenkanal und einen Kanal für ECM-Kontrollnachrichten umfasst,
- Unterteilung des Stroms, um ihn paketweise an den mobilen Empfänger zu senden,
- Extraktion des Kanals für Kontrollnachrichten dieses unterteilten Stroms, Bildung eines Blocks, der mindestens den Datenkanal enthält, kompatibel mit der Sendung an den mobilen Empfänger,
- Extraktion, ausgehend von dem unterteilten Strom, mindestens einer Kontrollnachricht aus dem Kanal für Kontrollnachrichten,
- Eingabe in den Block einer Anzahl von Kontrollnachrichten niedriger als die Anzahl allen extrahierten Kontrollnachrichten, um ein Paket zu bilden.

2. Verfahren zur Erzeugung von Paketen nach Anspruch 1, **gekennzeichnet dadurch, dass** besagter Block mindestens einen Audio-/Videoinhalt enthält.

3. Verfahren zur Erzeugung von Paketen nach Anspruch 1 oder 2, **gekennzeichnet dadurch, dass** das Paket außerdem Hilfsinformationen wie Bildschirmtext, Untertitel, Nachrichten-Lauftext oder Metainformationen enthält.

4. Verfahren zur Erzeugung von Paketen, gerichtet an mindestens einen mobilen Empfänger, mit den folgenden Schritten:
- Empfang eines verschlüsselten Stroms, der einen Dienst darstellt und mindestens einen Datenkanal und einen Kanal für ECM-Kontrollnachrichten umfasst,
- Unterteilung des Stroms, um ihn paketweise an den mobilen Empfänger zu senden,
- Bildung, ausgehend von dem unterteilten Strom, eines Blocks, der mindestens den Datenkanal und den Kanal für Kontrollnachrichten enthält, kompatibel mit der Sendung an den mobilen Empfänger,
- Ermittlung der identischen Mitteilungen des Kanals für Kontrollnachrichten, die in besagtem Block wiederholt werden,
- Beseitigung mindestens einiger der genannten wiederholten identischen Mitteilungen, wobei man mindestens eine der wiederholten identischen Mitteilungen aufbewahrt.

5. Verfahren zur Erzeugung von Paketen nach Anspruch 4, **gekennzeichnet dadurch, dass** besagte Daten des Datenkanals einen Audio-/Videoinhalt bilden.

6. Verfahren zur Erzeugung von Paketen nach Anspruch 4, **gekennzeichnet dadurch, dass** man die beseitigten Mitteilungen durch einen Inhalt ersetzt.

7. Verfahren zur Erzeugung von Paketen nach Anspruch 6, **gekennzeichnet dadurch, dass** besagter Inhalt ein Audio-/Videoinhalt ist.

8. Verfahren zur Erzeugung von Paketen nach Anspruch 6, **gekennzeichnet dadurch, dass** besagter Inhalt aus Hilfsinformationen besteht, wie Bildschirmtext, Untertitel, Nachrichten-Lauftexte oder Metainformationen.

9. Verfahren zur Erzeugung von Paketen nach Anspruch 4, **gekennzeichnet dadurch, dass** besagte wiederholte identische Mitteilungen Kontrollnachrichten (ECM) sind.

10. Verfahren zur Erzeugung von Paketen nach Anspruch 9, **gekennzeichnet dadurch, dass** besagte Kontrollnachricht (ECM) an den Anfang des Datenpakets gestellt wird.

11. Verfahren zur Erzeugung von Paketen nach Anspruch 9, **gekennzeichnet dadurch, dass** die Kontrollnachricht (ECM) an einer beliebigen Stelle des Datenpakets platziert wird.

## Claims

1. Method for generation of packets intended for at least one mobile receiver, comprising the following steps:
- reception of an encrypted stream representing a service, this stream comprising at least a data channel and a control message ECM channel,
- slicing of said stream to send it in packets to the mobile receiver,
- extraction of the control message channel of this sliced stream,
- formation of a block containing at least the data channel, compatible with the diffusion to said mobile receiver,
- extraction from said sliced stream of at least one control message of the control message channel,
- introduction into the block of a number of control messages lower than the totality of the extracted control messages, in order to form a packet.

2. Method for generation of packets according to claim 1, **characterised in that** said block contains at least an audio/video content.

3. Method for generation of packets according to claim 1 or 2, **characterised in that** said packet also contains auxiliary information such as teletext, subtitles, news ticker or meta-information.

4. Method for generation of packets intended for at least one mobile receiver, comprising the following steps:
- receiving an encrypted stream representing a service, this stream comprising at least a data channel and a control message channel ECM,
- slicing said stream to send it in packets to the mobile receiver,
- forming, from said sliced stream, a block containing at least the data channel and the control message channel, compatible with the broadcast to said mobile receiver,
- determining the identical messages of the control message channel repeated in said block,
- eliminating at least some of said identical repeated messages, at the same time as conserving at least one of said identical repeated messages.

5. Method for generation of packets according to claim 4, **characterised in that** said data of the data channel forms an audio/video content.

6. Method for generation of packets according to claim 4, **characterised in that** said eliminated messages are replaced by a content.

7. Method for generation of packets according to claim 6, **characterised in that** said content is an audio/video content.

8. Method for generation of packets according to claim 6, **characterised in that** said content is formed by auxiliary information such as teletext, subtitles, news ticker or meta-information.

9. Method for generation of packets according to claim 4, **characterised in that** said identical repeated messages are control messages (ECM).

10. Method for generation of packets according to claim 9, **characterised in that** said control message (ECM) is placed at the start of the data packet.

11. Method for generation of packets according to claim 9, **characterised in that** said control message (ECM) is placed in any position in the data packet.
